(19)

Europäisches
Patentamt

European
Patent Office

Office européen
des brevets

(11) **EP 4 484 537 A1**

(12) **EUROPEAN PATENT APPLICATION**
published in accordance with Art. 153(4) EPC

(43) Date of publication:
01.01.2025 Bulletin 2025/01

(21) Application number: 23763733.5

(22) Date of filing: 03.03.2023

(51) International Patent Classification (IPC):
*C11D 7/20* (2006.01)     *C11D 7/12* (2006.01)
*C11D 7/26* (2006.01)     *C11D 7/40* (2006.01)
*C11D 17/06* (2006.01)     *C03C 3/087* (2006.01)

(52) Cooperative Patent Classification (CPC):
C03C 3/087; C11D 7/12; C11D 7/20; C11D 7/26;
C11D 7/40; C11D 17/06

(86) International application number:
PCT/KR2023/002919

(87) International publication number:
WO 2023/167535 (07.09.2023 Gazette 2023/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 03.03.2022 KR 20220027417

(71) Applicant: LG Electronics Inc.
Yeongdeungpo-gu
Seoul 07336 (KR)

(72) Inventors:
• KWON, Yooseok
  Seoul 08592 (KR)
• KIM, Young Seok
  Seoul 08592 (KR)
• KIM, Namjin
  Seoul 08592 (KR)

(74) Representative: Vossius & Partner
Patentanwälte Rechtsanwälte mbB
Siebertstrasse 3
81675 München (DE)

(54) **ECO-FRIENDLY DETERGENT COMPOSITION AND METHOD FOR MANUFACTURING ECO-FRIENDLY DETERGENT POWDER BY USING SAME**

(57)     Disclosed in the present invention are an eco-friendly detergent composition and a method for preparing an eco-friendly detergent powder by using same, wherein the eco-friendly detergent composition can exhibit equal or superior detergency, in spite of no addition of a surfactant, compared with existing synthetic detergents with petroleum-based surfactants. As a result, the eco-friendly detergent composition according to the present invention has an excellent detergent effect against pigment-based contaminants, in spite of no addition of a bleaching agent, and does not show a bleaching agent-causing degradation in the detergency against protein contaminants.

FIG. 2

## Description

### FIELD

The present disclosure relates to an eco-friendly detergent composition and a method for preparing eco-friendly detergent powder using the same.

### DESCRIPTION OF RELATED ART

In general, a detergent refers to a mixture used to remove contaminants attached to a surface of an object via complex physical and chemical actions such as adsorption, wetting, interfacial tension reduction, emulsification, solubilization, and dispersion, and use of the detergent is increasing domestically and internationally.

Such detergent has been steadily developing, and various types of detergents are currently being sold, but among them, detergents with high cleaning power are widely used.

However, the existing detergent contains a surfactant as a main component thereof. Such surfactant not only causes environmental pollution problems as microorganism decomposition is difficult, but also acts as a factor that increases water consumption resulted from foam rinsing, and causes skin damage caused by a residual detergent or contact with the detergent.

Accordingly, detergents made of natural ingredients or detergents with no surfactants included are being developed, but they have lower washing performance than the existing detergents.

Therefore, there is a growing demand for an eco-friendly natural detergent composition that does not cause the environmental pollution, but exhibits cleaning power comparable to that of the existing synthetic detergents.

[Prior Art Document]

(Patent Document 1) KR Patent Application Publication No. 10-2007-0022437 (Published on February 27, 2007)

### DISCLOSURE

### TECHNICAL PURPOSES

The present disclosure is to provide an eco-friendly detergent composition and a method for preparing eco-friendly detergent powder using the same that may exhibit cleaning power equivalent to or greater than that of an existing synthetic detergent containing a petroleum-based surfactant, even though no surfactant is added.

In addition, the present disclosure is to provide an eco-friendly detergent composition and a method for preparing eco-friendly detergent powder using the same that may exhibit cleaning power equivalent to or greater than that of a commercial detergent containing a bleach, even though no bleach is added.

In addition, the present disclosure is to provide an eco-friendly detergent composition and a method for preparing eco-friendly detergent powder using the same that may contribute to water quality environment improvement and water usage reduction because they are nontoxic to skin as no surfactant is added, have excellent biodegradability, and save rinsing water during washing.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims and combinations thereof.

### TECHNICAL SOLUTIONS

The eco-friendly detergent composition and the method for preparing the eco-friendly detergent powder using the same according to the present disclosure have no skin toxicity because no surfactant is added, have excellent biodegradability, and save rinsing water during washing, thereby contributing to improving water quality and reducing water usage.

In addition, the eco-friendly detergent composition and the method for preparing the eco-friendly detergent powder using the same according to the present disclosure do not contain the surfactant, so that they may not only significantly reduce the water usage compared to the existing synthetic detergent containing the petroleum-based surfactant, but also prevent the water pollution in advance because they are the detergents that use only the natural substances without the surfactant.

In addition, the eco-friendly detergent composition and the method for preparing the eco-friendly detergent powder using the same according to the present disclosure may reduce the number of rinsing cycles of the washing machine, thereby reducing the power consumption and thus achieving the energy-saving effect, and exhibiting superior deodorizing properties when compared to the existing synthetic detergent.

To this end, an eco-friendly detergent composition according to the present disclosure includes 30 to 70wt% of a water-soluble glass composition, 1 to 20wt% of sodium carbonate, 1 to 10wt% of sodium percarbonate, 1 to 10wt% of sodium bicarbonate, 1 to 10wt% of enzyme, 1 to 20wt% of citric acid, 1 to 5wt% of sodium chloride, 0.5 to 5wt% of polyvinyl alcohol, 0.5 to 5wt% of starch, and 0.5 to 5wt% of wheat flour.

## TECHNICAL EFFECTS

The eco-friendly detergent composition and the method for preparing the eco-friendly detergent powder using the same according to the present disclosure may exhibit the excellent cleaning power equivalent to or greater than that of the existing synthetic detergent containing the petroleum-based surfactant, even though no surfactant is added.

As a result, the eco-friendly detergent composition and the method for preparing the eco-friendly detergent powder using the same according to the present disclosure may exhibit the excellent washing effect on the colored stains even though no bleach is added, and do not experience the reduction in the cleaning power for the protein-based stains resulted from the bleach.

In addition, the eco-friendly detergent composition and the method for preparing the eco-friendly detergent powder using the same according to the present disclosure do not contain the surfactant, so that they may not only significantly reduce the water usage compared to the existing synthetic detergent containing the petroleum-based surfactant, but also prevent the water pollution in advance because they are the detergents that use only the natural substances without the surfactant.

In addition, the eco-friendly detergent composition and the method for preparing the eco-friendly detergent powder using the same according to the present disclosure may reduce the number of rinsing cycles of the washing machine, thereby reducing the power consumption and thus achieving the energy-saving effect, and exhibiting superior deodorizing properties when compared to the existing synthetic detergent.

In addition to the above-described effects, specific effects of the present disclosure will be described together while describing specific matters for carrying out the invention below.

## BRIEF DESCRIPTION OF DRAWINGS

FIG. 1 schematically shows a washing mechanism of stains by alkali ions ($OH^-$).

FIG. 2 is a process flow diagram showing a method for preparing eco-friendly detergent powder according to an embodiment of the present disclosure.

## DETAILED DESCRIPTIONS

The above-mentioned purposes, features, and advantages will be described in detail later with reference to the attached drawings, so that those skilled in the art in the technical field to which the present disclosure belongs may easily practice the technical ideas of the present disclosure. In describing the present disclosure, when it is determined that a detailed description of the publicly known technology related to the present disclosure may unnecessarily obscure the gist of the present disclosure, the detailed description thereof will be omitted. Hereinafter, a preferred embodiment according to the present disclosure will be described in detail with reference to the attached drawings. In the drawings, identical reference numerals are used to indicate identical or similar components.

As used herein, singular expressions include plural expressions, unless the context clearly dictates otherwise. In the present application, terms such as "composed of" or "include" should not be construed as necessarily including all of various components or steps described herein, and should be interpreted as being able to not including some of the components or the steps and further including additional components or steps.

Hereinafter, an eco-friendly detergent composition and a method for preparing eco-friendly detergent powder using the same according to an embodiment of the present disclosure will be described.

## <Eco-friendly detergent composition>

An eco-friendly detergent composition according to an embodiment of the present disclosure has cleaning power equivalent to or greater than that of an existing synthetic detergent containing a petroleum-based surfactant, even though no surfactant is added.

In addition, the eco-friendly detergent composition according to an embodiment of the present disclosure has cleaning power equivalent to or greater than that of a commercial detergent containing a bleach, even though no bleach is added.

In addition, the eco-friendly detergent composition according an embodiment of the present disclosure has no skin toxicity because no surfactant is added, has excellent biodegradability, and saves rinsing water during washing, thereby contributing to improving water quality and reducing water usage.

As described above, the eco-friendly detergent composition according to the present disclosure does not include the surfactant, which is a main component of the existing synthetic detergent.

In general, the surfactant has very low biodegradability, so that when discharged into a river, it is difficult to decompose by microorganisms, and generates bubbles on a surface of the river to block supply of oxygen in air, thereby hindering a natural purification activity of the river. In addition, the synthetic detergent with the surfactant added generates a large amount of foam, and thus, requires a large amount of rinsing water during the washing, which increases the water usage.

In contrast, the eco-friendly detergent composition according to an embodiment of the present disclosure has washing performance equivalent to or higher than that of the existing synthetic detergent with the surfactant added, but does not cause water pollution because no surfactant is added, thereby not only significantly reducing the water usage, but also not causing skin damage resulted from skin contact.

To this end, the eco-friendly detergent composition according to an embodiment of the present disclosure includes 30 to 70wt% of a water-soluble glass composition, 1 to 20wt% of sodium carbonate, 1 to 10wt% of sodium percarbonate, 1 to 10wt% of sodium bicarbonate, 1 to 10wt% of an enzyme, 1 to 20wt% of citric acid, 1 to 5wt% of sodium chloride, 0.5 to 5wt% of polyvinyl alcohol, 0.5 to 5wt% of starch, and 0.5 to 5wt% of wheat flour.

In this regard, the water-soluble glass composition and the sodium carbonate may be added in a weight ratio of 2:1 to 7:1, and the water-soluble glass composition and the citric acid may be added in a weight ratio of 5:1 to 10:1.

In addition, it is preferable that the water-soluble glass composition is alkaline silicate glass.

More specifically. The alkaline silicate glass may include 30 to 70wt% of $SiO_2$, 1 to 10wt% of $Al_2O_3$, 5 to 30wt% of $Na_2O$, 5 to 30wt% of $K_2O$, 1 to 20wt% of MgO, and 1 to 20wt% of CaO.

In this regard, the enzyme may include at least one selected from a group consisting of a protease, a lipase, a carbohydrase, and a cellulase, and the starch may include at least one selected from a group consisting of potato starch, corn starch, and sweet potato starch.

The eco-friendly detergent composition according to an embodiment of the present disclosure described above exhibits excellent cleaning power equivalent to or greater than that of the existing synthetic detergent containing the petroleum-based surfactant, even though no surfactant is added.

As a result, the eco-friendly detergent composition according to an embodiment of the present disclosure has an excellent washing effect on colored stains despite the absence of the bleach, and does not experience reduction of the cleaning power for protein-based stains caused by the bleach.

In addition, the eco-friendly detergent composition according to an embodiment of the present disclosure may not only, as no surfactant is added thereto, significantly reduce the water usage compared to the existing synthetic detergent with the petroleum-based surfactant added, but also, as it is a detergent that uses only natural substances without the surfactant, prevent the water pollution in advance.

In addition, the eco-friendly detergent composition according to an embodiment of the present disclosure may reduce a rinsing cycle of a washing machine, thereby reducing power consumption and thus exhibiting an energy-saving effect, and exhibiting excellent deodorizing properties compared to the existing synthetic detergent.

Hereinafter, a role and a content of each component of the eco-friendly detergent composition according to an embodiment of the present disclosure will be described in detail.

Water-soluble glass composition

The water-soluble glass composition is a main component of the eco-friendly detergent composition and plays a role in improving the washing performance.

Such water-soluble glass composition is included in an amount of 30 to 70wt% of a total weight of the eco-friendly detergent composition according to the present disclosure.

When the water-soluble glass composition is added in an amount smaller than 30wt%, it is difficult to properly exhibit an effect of improving the washing and bleaching performances via silicate ions. On the other hand, when the water-soluble glass composition is added in an amount exceeding 70wt%, cleaning power for the colored stains and the proteins is improved, but there is a concern that cleaning power for cocoa and the proteins may be reduced resulted from a decrease in the enzyme content.

In this regard, it is preferable to use alkali borosilicate glass as the water-soluble glass composition. More specifically, the alkali borosilicate glass includes 50 to 85wt% of $B_2O_3$, 1 to 15wt% of $SiO_2$, and 5 to 50wt% of $Na_2O$ and $K_2O$ in total.

The alkaline silicate glass is a glass material prepared by melting mineral components ($Na^+$, $K^+$, $Ca^{2+}$, and $Mg^{2+}$) and silicate components (Si-O) that may be easily found in nature at high temperatures. When the alkaline silicate glass is added to water, the material may easily dissolve and a large amount of $Na^+$, $K^+$, $OH^-$, and $Si(OH)_4^-$ ions may be eluted. As the number of eluted $OH^-$ ions generated as such increases, pH of washing water increases, and accordingly, washing water becomes alkaline and decomposes stains in fibers.

Strong alkaline components easily decompose animal fat and protein. Therefore, the strong alkaline components may dissolve stains stuck to fabrics, and this washing principle is not much different from a washing principle of the synthetic detergent. The $OH^-$ ions mainly decompose stains in the fibers, which are insoluble substances (the protein, sebum, and the like), into water-soluble substances, and dissolve the water-soluble substances in water. The elution of the $OH^-$ ions makes water alkaline. Generally, when water is alkaline, an interfacial tension of water is lowered and a zeta potential of the fibers and the stains is increased, so that the stains are easily removed and re-contamination is prevented, which maximizes the cleaning power.

The eluted $OH^-$ ions and $Si(OH)_4^-$ ions are particularly strong in cleaning the protein and lipid stains. Because 70-80% of stains that occur in daily life contains protein components, a protein stain cleaning performance is a very important washing performance evaluation index. The increase in the number of eluted $OH^-$ increases the pH of washing water. As a result, the pH of washing water generally deviates from a protein isoelectric point, which is generally acidic (pH 4 ~ pH 6), to make the protein unstable, and the eluted ions decompose the protein to remove the stains.

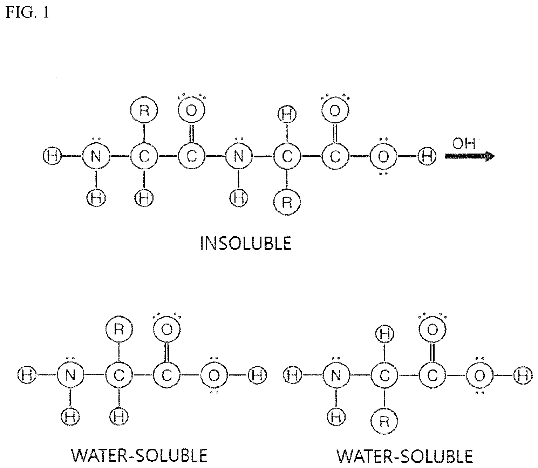

Referring to FIG. 1, a washing mechanism of the stains by alkali ions ($OH^-$) is schematically shown.

The alkaline silicate may be prepared in various forms, such as a liquid form eluted in an aqueous solution, a powder form obtained by grinding glass bulk, and a tablet form.

Sodium carbonate and sodium bicarbonate (baking soda)

Sodium carbonate and sodium bicarbonate dissolve in water to generate the alkali ions/hydroxyl ions ($OH^-$) to increase the pH of the solution, and penetrate deep into contaminants to enhance the cleaning power, as well as perform sterilization and bleaching actions.

The sodium carbonate is included in an amount of 1 to 20wt% of the total weight of the eco-friendly detergent composition of the present disclosure, and the sodium bicarbonate is included in an amount of 1 to 10wt% of the total weight of the eco-friendly detergent composition according to the present disclosure.

When the sodium carbonate and the sodium bicarbonate are added in amounts smaller than minimum contents, it may be difficult to properly perform the sterilization and bleaching actions. On the other hand, when the sodium carbonate and the sodium bicarbonate are added in large amounts exceeding maximum contents, concentration of the $OH^-$ ions increases, which may cause the discoloration of the colored stains.

Sodium chloride (salt)

Sodium chloride is a natural food that has functions such as a spoilage prevention (a preservative), detoxification, sterilization, deodorization, antifreeze, and skin protection. In particular, as a natural dehumidifier, it is used as an anticaking agent for powder detergents that are vulnerable to moisture.

Sodium chloride is added in a content ratio of 1 to 5wt% of the total weight of the eco-friendly detergent composition according to the present disclosure. When sodium chloride is added in an amount smaller than 1wt%, it may be difficult to properly function as the anticaking agent. On the other hand, when sodium chloride is added in a large amount exceeding 5wt%, it may only increase a preparation cost without any further increase in effectiveness, which is not economical.

Enzyme

Enzyme is effective in removing oxidized stains such as adhered proteins. As such enzyme, at least one selected from a group consisting of the protease, the lipase, the cellulase, and an amylase is added.

Table 1 summarizes a function of each enzyme.

[Table 1]

| Enzyme name | Primary substances decomposed |
| --- | --- |
| Protease | Decompose protein-based substances (sebum, sweat, blood, and the like) |
| Lipase | Decompose fatty substances (cooking oil, butter, and the like) |

(continued)

| Enzyme name | Primary substances decomposed |
|---|---|
| Amylase | Decompose starch-based substances (rice, potato, pasta, and the like) |
| Cellulase | Fiber surface cleaning |

As described in Table 1, the protease is effective in removing the oxidized stains such as the adhered proteins, and the lipase is effective in decomposing and removing the fatty substances. In addition, the amylase is effective in decomposing and removing the starch-based substances, and the cellulase is effective in cleaning the fiber surface. Such enzyme is added in a content ratio of 1 to 10wt% of the total weight of the eco-friendly detergent composition according to the present disclosure. When the amount of enzyme added is smaller than 1wt%, it may be difficult to remove the oxidized stains such as the adhered proteins. On the other hand, when the enzyme is excessively added in an amount exceeding 10wt%, the cleaning power for the cocoa and the proteins is improved, but the cleaning power for the colored stains and the proteins may be reduced because of the relatively low content of water-soluble glass composition.

Starch

The starch has a regular micelle structure because of strong bonds between molecules. When water is added to such starch and heated, water molecules permeate the micelle structure, a distance between starch particles gradually increases to cause expansion, and gelatinization occurs, in which the micelle structure disintegrates. In other words, a surface area that may come into contact with the contaminants increases because of the expansion of the starch, thereby improving the cleaning power of the detergent. To this end, it is preferable that the starch is added in a content ratio of 0.5 to 5wt% of the total weight of the eco-friendly detergent composition according to the present disclosure.

Wheat flour

The wheat flour is not a surfactant that has both lipophilic and hydrophilic groups, but acquires cleaning ability through an adsorption process because of a porous nature of the wheat flour. That is, because starch and protein in the wheat flour act as the lipophilic groups, types of hydrocarbon substances, adsorbed oil adheres well to the wheat flour, so that more effective cleaning may be achieved.

To this end, the wheat flour is preferably added in a content ratio of 0.5 to 5wt% of the total weight of the eco-friendly detergent composition according to the present disclosure.

In particular, the eco-friendly detergent composition according to an embodiment of the present disclosure uses the starch and the wheat flour simultaneously, so that the contact area with the contaminants, such as grease, increases because of the expansion of the starch, and the oil is adsorbed because of the porous nature of the wheat flour. Therefore, the cleaning power may be significantly improved compared to when only one of the wheat flour and the starch is used.

Polyvinyl alcohol

Polyvinyl alcohol is a formulation agent that maintains a shape of the detergent and is added to change a state of glass with low water resistance.

Polyvinyl alcohol is preferably added in a content ratio of 0.5 to 5wt% of the total weight of the eco-friendly detergent composition according to the present disclosure. When polyvinyl alcohol is added in an amount smaller than 0.5wt%, the amount added is too small for polyvinyl alcohol to properly function as the formulation agent. On the other hand, when polyvinyl alcohol is excessively added in an amount exceeding 5wt%, polyvinyl alcohol may only act as a factor that increases the preparation cost without any further effect, which is therefore not economical.

Sodium percarbonate

Sodium percarbonate added to the composition of the present disclosure is added to help with the bleaching washing. When sodium percarbonate comes into contact with water, it generates hydrogen peroxide and active oxygen. Accordingly, sodium percarbonate enhances a bleaching performance and the cleaning power. Hydrogen peroxide is converted into an active intermediate hydrogen peroxide anion by an alkaline medium. An oxygen free radical anion (perhydroxyl anion) generated at this time oxidizes and removes bleaching stains and the stains. In general, the bleach is used to remove persistent stains, such as pigments, from the fibers. The active oxygen derived from sodium percarbonate oxidizes double bonds of the pigments, leading to color loss. To this end, the composition of the present disclosure includes 1 to 10wt% of the sodium percarbonate.

Citric acid

Citric acid, which is slightly acidic, is a pH regulator that adjusts an overall pH of the detergent, and allows the detergent composition of the present disclosure to dissolve in water and maintain a slightly alkaline state (pH 8 to 11). In addition, the citric acid plays a role in removing or neutralizing the detergent that may remain after the washing, and is able to also serve as a fabric softener. To this end, the detergent composition of the present disclosure includes 1 to 20wt% of the citric acid.

As described above, the water-soluble glass composition and the sodium carbonate are preferably added in a weight ratio of 2:1 to 7:1, and the water-soluble glass composition and the citric acid are preferably added in a weight ratio of 5:1 to 10:1.

### <Method for preparing eco-friendly detergent composition>

Hereinafter, a method for preparing eco-friendly detergent powder according to an embodiment of the present disclosure will be described with reference to the attached drawings.

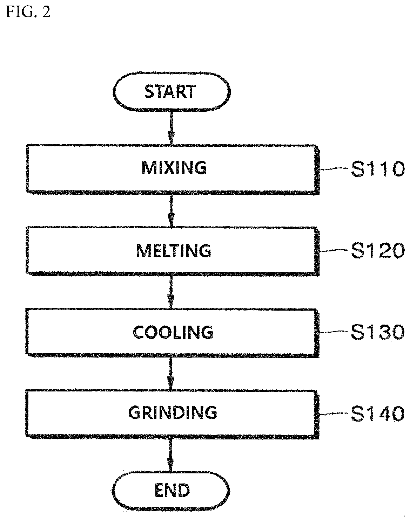

FIG. 2 is a process flow diagram showing a method for preparing eco-friendly detergent powder according to an embodiment of the present disclosure.

As shown in FIG. 2, the method for preparing the eco-friendly detergent powder according to an embodiment of the present disclosure includes a mixing step (S110), a melting step (S120), a cooling step (SI 30), and a grinding step (S140).

Mixing

In the mixing step (S110), the water-soluble glass composition described above is mixed and stirred to form the detergent composition. The water-soluble glass composition is as described above.

Melting

In the melting step (S120), the detergent composition is melted.

In the present step, the melting is preferably performed at a temperature in a range of 900 to 1,400°C for 1 to 60 minutes. When the melting temperature is lower than 900°C or the melting time is shorter than 1 minute, the water-soluble glass composition may not fully melt, leading to immiscibility in the glass melt. On the other hand, when the melting temperature exceeds 1,400°C or the melting time exceeds 60 minutes, it is not economical because excessive energy and time are required.

Cooling

In the cooling step (S130), the molten detergent composition is cooled to a room temperature.

In the present step, it is preferable that the cooling is performed in a cooling in furnace scheme. When air cooling or water cooling is applied, internal stress is severely generated, which may cause cracks in some cases, so that it is preferable that the cooling is performed in the cooling in furnace scheme.

Grinding

In the grinding step (S140), the cooled solid detergent is ground. In this regard, it is preferable to use a dry grinder for the grinding.

By such grinding, the glass solid is finely ground and eco-friendly glass powder is prepared. It is preferable that such eco-friendly glass powder has an average diameter equal to or smaller than 30 $\mu$m, but the present disclosure is not limited thereto.

With the above, the method for preparing the eco-friendly detergent powder according to an embodiment of the present disclosure may be completed.

### Examples

Hereinafter, a composition and a function of the present disclosure will be described in more detail via a preferred example of the present disclosure. However, this is presented as a preferred example of the present disclosure and is not able to be interpreted as limiting the present disclosure in any way.

Contents not described herein may be sufficiently technically inferred by those skilled in the present technical field, so that descriptions thereof will be omitted.

## 1. Preparation of eco-friendly detergent powder samples

Table 2 shows components and component ratios thereof for eco-friendly detergent compositions according to Present Examples 1 to 5. In this regard, the eco-friendly detergent compositions having the compositions described in Table 3 were melted at a temperature of 1,000°C in an electric furnace, and then cooled in a form of a glass bulk via the air cooling on a stainless steel plate to obtain solid detergents in a form of a cullet. Thereafter, the solid detergents were ground with the dry grinder (a ball mill) and then passed through a 400 mesh sieve to prepare eco-friendly detergent powder. In this regard, the water-soluble glass composition used was composed of 70wt% of $B_2O_3$, 8wt% of $SiO_2$, 10wt% of $Na_2O$, and 12wt% of $K_2O$.

[Table 2]

| Division | Water - soluble glass composition | Sodium carbonate | Sodium percarbonate | Sodium bicarbonate | Enzyme | Citric acid | Sodium chloride | Polyvinyl alcohol | Starch | Wheat flour |
|---|---|---|---|---|---|---|---|---|---|---|
| Present Example 1 | 65 | 10 | 5 | 5 | 5 | 7 | 1 | 1 | 0.5 | 0.5 |
| Present Example 2 | 60 | 15 | 5 | 3 | 5 | 9 | 1 | 1 | 0.5 | 0.5 |
| Present Example 3 | 61 | 8 | 7 | 8 | 6 | 7 | 1 | 1 | 0.5 | 0.5 |
| Present Example 4 | 55 | 12 | 7 | 7 | 7 | 9 | 1 | 1 | 0.5 | 0.5 |
| Present Example 5 | 57 | 8 | 7 | 8 | 7 | 10 | 1 | 1 | 0.5 | 0.5 |

(Unit: wt%) **2. Cleaning power measurement**

- Cleaning power evaluation method

The cleaning power is the most basic function of the washing detergent and refers to a degree to which dirt (stains or grime) on the clothing is removed by the detergent. To evaluate the cleaning power of the washing detergent, it is common to use a soiled cloth that is artificially soiled with dirt that may easily appear in real life. In the present cleaning power test, based on a washing load of 3kg, a recommended amount of detergent indicated on the product was used and the cleaning power was evaluated using various artificially soiled cloths as follows.

Soiled cloth used: Wet artificially soiled cloth (JISC 9606)

The corresponding soiled cloth, as a standard artificially soiled cloth adopted for a performance test of a washing machine in the Japanese Industrial Standards Electric Washing Machine Standard (JISC 9606), may represent complex stains mixed with various types of substances that may be encountered in daily life. A composition of each contamination source is as follows.

Soiled cloth name: (JISC 9606)
Material: cotton
Contaminants: oil, protein, others (mud and carbon black)

The cleaning power evaluation was conducted with an LG 21kg drum washing machine. The washing performance evaluation was conducted using a spectrophotometer (Minolta, CR-400) with a light source D65 at 520nm to measure surface reflectance of four places on front and rear surfaces of test cloths (an original cloth, a washed cloth, and the soiled cloth) and obtain an average whiteness value. Then, the cleaning power were compared with each other using a following formula.

$$Whiteness = 100 - \sqrt{(100 - L)^2 + a^2 + b^2}$$

$$Cleaning\ power(\%) = \frac{(After\ washing - Before\ washing)}{(White\ cloth - Before\ washing)} \times 100$$

Table 3 shows results of measuring the cleaning power for samples according to Present Examples 1 to 5 and Comparative Examples 1 to 3. In this regard, the samples according to Comparative Examples 1 to 3 were obtained using three commercial detergents sold on the market.

[Table 3]

| Division | | Cleaning power |
|---|---|---|
| **Commercial detergent** | **Comparative Example 1** | **19%** |
| | **(detergent T)** | |
| | **Comparative Example 2 (detergent F)** | **23%** |
| | **Comparative Example 3 (detergent P)** | **25%** |
| **Detergent of the present disclosure** | **Present Example 1** | **35%** |
| | **Present Example 2** | **33%** |
| | **Present Example 3** | **35%** |
| | **Present Example 4** | **37%** |
| | **Present Example 5** | **34%** |

As may be seen from the cleaning power results in the table above, the eco-friendly detergent of the present disclosure showed superior cleaning power when compared to the commercial detergents despite the absence of the surfactant. In addition to the cleaning power for the complex stains containing the oil, the protein, and the particulate grime, the eco-friendly detergent of the present disclosure may increase or decrease cleaning power for specific grime depending on the composition thereof. Based on the experimental results above, it was proven that in the case of the eco-friendly detergent powder samples, a detergent specialized for the specific grime is able to be developed by controlling each component and a component ratio thereof.

**3. Skin irritation and toxicity test**

Skin irritation test

To evaluate eco-friendliness of the detergent composition according to the present disclosure, a skin irritation test was conducted. The test was conducted by the Korea Apparel Testing & Research Institute, a skin patch test scheme was used, and a test method is as follows.

- Test method

1) Preparation of test sample: The test sample was diluted to a standard usage ratio, and then standard cotton pads (ISO 105-F02) were immersed in the test sample for subsequent use.
2) The pads were attached directly to respective forearms of 20 healthy adults for 24 hours.
3) After removing the attached pads, a visual evaluation was performed. When there is no significant change, a skin replica of the patch site was created.

4) The skin replica was observed under a microscope to assess a degree of microscopic irritation in four grades: negative, semi-negative, semi-positive, and positive based on evaluation criteria.

- Test Results

As a result of the skin irritation test, all of Present Examples 1 to 5 above were evaluated as non-irritant (a lowest irritation level), proving the eco-friendliness of the detergent according to the present disclosure.

(2) Toxicity evaluation

To evaluate toxicity of the detergent composition according to the present disclosure, the Korea Bio-safety Institute conducted an acute oral toxicity evaluation and an acute fish toxicity test (ETF-20057). The acute oral toxicity evaluation is a test that administers a certain amount of detergent to rats for 14 days, and all of Present Examples of the present disclosure were categorized as GHS Category 5 (lowest toxicity).

The acute fish toxicity test is a test that evaluates toxicity of the detergent using minnow, and all of Present Examples of the present disclosure were found to have the lowest toxicity.

With the above results, it may be determined that the eco-friendly detergent composition according to the present disclosure has low toxicity.

Although the present disclosure has been described with reference to the accompanying drawings, the present disclosure is not limited by the embodiments disclosed herein and the drawings, and it is obvious that various modifications may be made by those skilled in the art within the scope of the technical idea of the present disclosure. In addition, although the effects based on the configuration of the present disclosure are not explicitly described and illustrated in the description of the embodiment of the present disclosure above, it is natural that predictable effects of the corresponding configuration should also be recognized.

**Claims**

1.   An eco-friendly detergent composition comprising:

30 to 70wt% of a water-soluble glass composition;
1 to 20wt% of sodium carbonate;
1 to 10wt% of sodium percarbonate;
1 to 10wt% of sodium bicarbonate;
1 to 10wt% of enzyme;
1 to 20wt% of citric acid;
1 to 5wt% of sodium chloride;
0.5 to 5wt% of polyvinyl alcohol;
0.5 to 5wt% of starch; and
0.5 to 5wt% of wheat flour.

2.   The eco-friendly detergent composition of claim 1, wherein the water-soluble glass composition and the sodium carbonate are added in a weight ratio of 2:1 to 7:1.

3.   The eco-friendly detergent composition of claim 1, wherein the water-soluble glass composition and the above citric acid are added in a weight ratio of 5:1 to 10:1.

4.   The eco-friendly detergent composition of claim 1, wherein the water-soluble glass composition is alkaline silicate glass.

5.   The eco-friendly detergent composition of claim 4, wherein the alkaline silicate glass includes:

based on 100wt% of the alkaline silicate glass,
30 to 70wt% of $SiO_2$;
1 to 10wt% of $Al_2O_3$;
5 to 30wt% of $Na_2O$;
5 to 30wt% of $K_2O$;
1 to 20wt% of $MgO$; and

1 to 20wt% of CaO.

6. The eco-friendly detergent composition of claim 1, wherein the enzyme includes at least one selected from a group consisting of protease, lipase, carbohydrase, and cellulase.

7. The eco-friendly detergent composition of claim 1, wherein the starch includes at least one selected from a group consisting of potato starch, corn starch, and sweet potato starch.

8. A method for preparing eco-friendly detergent powder, the method comprising:

    (a) forming a detergent composition by mixing and stirring a composition including:

      30 to 70wt% of a water-soluble glass composition;
      1 to 20wt% of sodium carbonate;
      1 to 10wt% of sodium percarbonate;
      1 to 10wt% of sodium bicarbonate;
      1 to 10wt% of enzyme;
      1 to 20wt% of citric acid;
      1 to 5wt% of sodium chloride;
      0.5 to 5wt% of polyvinyl alcohol;
      0.5 to 5wt% of starch; and
      0.5 to 5wt% of wheat flour;

    (b) melting the detergent composition;
    (c) cooling the melted detergent composition; and
    (d) grinding the cooled solid detergent.

9. The method of claim 8, wherein in the (a), the water-soluble glass composition and the sodium carbonate are added in a weight ratio of 2:1 to 7:1.

10. The method of claim 8, wherein in the (a), the water-soluble glass composition and the above citric acid are added in a weight ratio of 5:1 to 10:1.

11. The method of claim 8, wherein in the (a), the water-soluble glass composition is alkaline silicate glass.

12. The method of claim 11, wherein the alkaline silicate glass includes:

    based on 1 00wt% of the alkaline silicate glass,
    30 to 70wt% of $SiO_2$;
    1 to 10wt% of $Al_2O_3$;
    5 to 30wt% of $Na_2O$;
    5 to 30wt% of $K_2O$;
    1 to 15wt% of $SiO_2$;
    1 to 20wt% of MgO; and
    1 to 20wt% of CaO.

13. The method of claim 8, wherein in the (a), the enzyme includes at least one selected from a group consisting of protease, lipase, carbohydrase, and cellulase.

14. The method of claim 8, wherein in the (a), the starch includes at least one selected from a group consisting of potato starch, corn starch, and sweet potato starch.

FIG. 1

INSOLUBLE

WATER-SOLUBLE          WATER-SOLUBLE

FIG. 2

**EP 4 484 537 A1**

<div align="center">

**INTERNATIONAL SEARCH REPORT**

</div>

| | International application No. |
|---|---|
| | **PCT/KR2023/002919** |

| A. | CLASSIFICATION OF SUBJECT MATTER |
|---|---|
| | **C11D 7/20**(2006.01)i; **C11D 7/12**(2006.01)i; **C11D 7/26**(2006.01)i; **C11D 7/40**(2006.01)i; **C11D 17/06**(2006.01)i; **C03C 3/087**(2006.01)i |
| | According to International Patent Classification (IPC) or to both national classification and IPC |

| B. | FIELDS SEARCHED |
|---|---|
| | Minimum documentation searched (classification system followed by classification symbols) |
| | C11D 7/20(2006.01); B01F 13/10(2006.01); B08B 3/08(2006.01); C01B 33/32(2006.01); C11D 1/12(2006.01); C11D 1/62(2006.01); C11D 11/00(2006.01); C11D 3/00(2006.01); C11D 3/08(2006.01) |
| | Documentation searched other than minimum documentation to the extent that such documents are included in the fields searched |
| | Korean utility models and applications for utility models: IPC as above<br>Japanese utility models and applications for utility models: IPC as above |
| | Electronic data base consulted during the international search (name of data base and, where practicable, search terms used) |
| | eKOMPASS (KIPO internal) & keywords: 세제(detergent), 알칼리 실리케이트 유리(alkali silicate glass), 탄산나트륨 (sodium carbonate), 과탄산나트륨(sodium percarbonate), 탄산수소나트륨(sodium bicarbonate), 구연산(citric acid), 염화나 트륨(NaCl), 효소(enzyme), 전분(starch), 밀가루(flour), 폴리비닐알콜(polyvinyl alcohol) |

| C. | DOCUMENTS CONSIDERED TO BE RELEVANT | |
|---|---|---|
| Category* | Citation of document, with indication, where appropriate, of the relevant passages | Relevant to claim No. |
| Y | US 2007-0225197 A1 (KRUSE, H.-F. et al.) 27 September 2007 (2007-09-27)<br>  See paragraphs [0035], [0038], [0063], [0077], [0078], [0082] and [0084]; and claims 38, 59 and 62. | 1-14 |
| Y | US 2013-0146102 A1 (MONSRUD, L. J. et al.) 13 June 2013 (2013-06-13)<br>  See paragraphs [0088] and [0215]; and claims 1 and 7. | 1-14 |
| Y | CN 1537809 A (ZHANG, X.) 20 October 2004 (2004-10-20)<br>  See abstract; and claim 1. | 5,12 |
| A | US 2021-0380905 A1 (THE PROCTER & GAMBLE COMPANY) 09 December 2021 (2021-12-09)<br>  See entire document. | 1-14 |
| A | US 2019-0169533 A1 (THE PROCTER & GAMBLE COMPANY) 06 June 2019 (2019-06-06)<br>  See entire document. | 1-14 |

| ☑ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **07 June 2023** | **08 June 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2023/002919**

**C.    DOCUMENTS CONSIDERED TO BE RELEVANT**

| Category* | Citation of document, with indication, where appropriate, of the relevant passages | Relevant to claim No. |
|---|---|---|
| A | US 6310027 B1 (DALE, D. A.) 30 October 2001 (2001-10-30)<br>See entire document. | 1-14 |

**INTERNATIONAL SEARCH REPORT**
Information on patent family members

International application No.

**PCT/KR2023/002919**

| Patent document cited in search report | | | Publication date (day/month/year) | Patent family member(s) | | | Publication date (day/month/year) |
|---|---|---|---|---|---|---|---|
| US | 2007-0225197 | A1 | 27 September 2007 | AT | 460470 | T | 15 March 2010 |
| | | | | AT | 465233 | T | 15 May 2010 |
| | | | | DE | 102004016497 | A1 | 20 October 2005 |
| | | | | DE | 102004016497 | B4 | 26 April 2007 |
| | | | | EP | 1733019 | A1 | 20 December 2006 |
| | | | | EP | 1733019 | B1 | 21 April 2010 |
| | | | | EP | 1842900 | A1 | 10 October 2007 |
| | | | | EP | 1842900 | B1 | 10 March 2010 |
| | | | | ES | 2340878 | T3 | 10 June 2010 |
| | | | | ES | 2343417 | T3 | 30 July 2010 |
| | | | | JP | 2007-531803 | A | 08 November 2007 |
| | | | | PL | 1733019 | T3 | 30 September 2010 |
| | | | | PL | 1842900 | T3 | 31 August 2010 |
| | | | | WO | 2005-105973 | A1 | 10 November 2005 |
| US | 2013-0146102 | A1 | 13 June 2013 | AU | 2012-351758 | A1 | 05 June 2014 |
| | | | | AU | 2012-351758 | B2 | 17 March 2016 |
| | | | | BR | 112014014222 | A2 | 13 June 2017 |
| | | | | BR | 112014014222 | A8 | 13 June 2017 |
| | | | | CA | 2857277 | A1 | 20 June 2013 |
| | | | | CA | 2857277 | C | 25 October 2016 |
| | | | | CN | 103998590 | A | 20 August 2014 |
| | | | | CN | 103998590 | B | 01 February 2019 |
| | | | | EP | 2791301 | A1 | 22 October 2014 |
| | | | | EP | 2791301 | B1 | 04 October 2017 |
| | | | | EP | 3282004 | A1 | 14 February 2018 |
| | | | | EP | 3282004 | B1 | 31 July 2019 |
| | | | | ES | 2643844 | T3 | 24 November 2017 |
| | | | | ES | 2750872 | T3 | 27 March 2020 |
| | | | | JP | 2015-501871 | A | 19 January 2015 |
| | | | | JP | 6014163 | B2 | 25 October 2016 |
| | | | | US | 9139800 | B2 | 22 September 2015 |
| | | | | WO | 2013-088266 | A1 | 20 June 2013 |
| CN | 1537809 | A | 20 October 2004 | CN | 1235797 | C | 11 January 2006 |
| US | 2021-0380905 | A1 | 09 December 2021 | CA | 3181221 | A1 | 09 December 2021 |
| | | | | EP | 4162017 | A1 | 12 April 2023 |
| | | | | WO | 2021-247345 | A1 | 09 December 2021 |
| US | 2019-0169533 | A1 | 06 June 2019 | CN | 111417706 | A | 14 July 2020 |
| | | | | CN | 111417706 | B | 03 September 2021 |
| | | | | CN | 113481063 | A | 08 October 2021 |
| | | | | EP | 3717610 | A1 | 07 October 2020 |
| | | | | JP | 2021-504593 | A | 15 February 2021 |
| | | | | JP | 7069316 | B2 | 17 May 2022 |
| | | | | US | 10377966 | B2 | 13 August 2019 |
| | | | | WO | 2019-108714 | A1 | 06 June 2019 |
| US | 6310027 | B1 | 30 October 2001 | AT | 494355 | T | 15 January 2011 |
| | | | | AU | 1622300 | A | 05 June 2000 |
| | | | | CA | 2348896 | A1 | 25 May 2000 |
| | | | | DE | 69943113 | D1 | 17 February 2011 |
| | | | | DK | 1129163 | T3 | 21 March 2011 |

Form PCT/ISA/210 (patent family annex) (July 2022)

**INTERNATIONAL SEARCH REPORT**
Information on patent family members

International application No.

**PCT/KR2023/002919**

| Patent document cited in search report | Publication date (day/month/year) | Patent family member(s) | | Publication date (day/month/year) |
|---|---|---|---|---|
| | | EP | 1129163 A1 | 05 September 2001 |
| | | EP | 1129163 B1 | 05 January 2011 |
| | | ES | 2355123 T3 | 23 March 2011 |
| | | JP | 2002-530479 A | 17 September 2002 |
| | | MX | PA01004750 A | 01 July 2005 |
| | | PT | 1129163 E | 11 February 2011 |
| | | US | 2001-0031717 A1 | 18 October 2001 |
| | | US | 6635611 B2 | 21 October 2003 |
| | | WO | 00-29534 A1 | 25 May 2000 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020070022437